# FASCICULE DE BREVET EUROPEEN

(11) **EP 1 084 379 B1**
(45) Date de publication et mention de la délivrance du brevet: **21.09.2005**
(21) Numéro de dépôt: 99923655.7
(22) Date de dépôt: 02.06.1999
(51) Int. Cl.: G01B 11/24

(54) **Acquisition opto électrique de formes par codage chromatique avec des plans d'illumination**
Optoelektronische Formerfassung durch chromatische Kodierung mit Beleuchtungsebenen
Optoelectric acqusition of shapes by chromatic coding with illumination planes

(30) Priorité: 05.06.1998 FR 9807076
(43) Date de publication de la demande: 21.03.2001
(73) Titulaire: Cynovad, Inc., St Laurent, Quebec H4S 1V9 (CA)
(72) Inventeur: GUERN, Yves, F-13490 Jouques (FR)
(74) Mandataire: Ramey, Daniel
(86) Numéro de dépôt international: PCT/FR1999/001299
(87) Numéro de publication internationale: WO 1999/064816

(56) Documents cités:
- EP-A- 0 706 027
- US-A- 5 701 173
- PATENT ABSTRACTS OF JAPAN vol. 096, no. 001, 31 janvier 1996 (1996-01-31) & JP 07 248211 A (TOYOTA CENTRAL RES & DEV LAB INC), 26 septembre 1995 (1995-09-26)

## Description

L'invention concerne un procédé et un dispositif d'acquisition opto-électrique de formes.

On connaît déjà plusieurs techniques de ce type:
- la stéréovision, qui consiste à déduire le relief d'une surface par comparaison d'images de cette surface prises sous au moins deux angles différents. Ce procédé demande des moyens de calcul très importants, il est limité aux parties de surface qui sont visibles sous les deux angles à la fois, et la localisation des arêtes est imprécise,
- l'observation d'une surface par une caméra dont on modifie la mise au point, ce qui permet d'associer une distance (celle de mise au point) à chaque zone nette d'une image de la surface. Ce système demande des moyens de calcul très importants, les durées de mesure sont longues et la résolution spatiale n'est pas très bonne,
- la mesure du temps mis par une impulsion lumineuse pour parcourir la distance comprise entre un émetteur et la surface et celle comprise entre la surface et un récepteur, ou bien la mesure du déphasage entre un éclairage modulé projeté sur la surface et l'observation de la lumière rétrodiffusée par la surface. Ces moyens permettent des mesures ponctuelles et doivent être associés à des moyens de balayage, ce qui limite la vitesse d'acquisition,
- la triangulation, qui permet de déterminer la longueur de deux côtés d'un triangle quant on connaît deux angles du triangle et la longueur du troisième côté, et dont une application consiste a projeter sur la surface un flux lumineux structuré, à observer au moyen d'une caméra les déformations de ce flux par la surface et à en déduire par triangulation les distances des points de la surface par rapport à un plan de référence. Cette technique est soumise aux limites de la triangulation (il faut une distance aussi grande que possible entre les moyens d'éclairage et la caméra et des directions d'éclairage et d'observation différentes) de sorte que des zones de surfaces complexes ne peuvent être éclairées et observées simultanément.

### La codage chromatique.

L'invention a pour objet une technique d'acquisition rapide d'une forme tridimensionnelle par voie optique.

Elle a également pour objet une technique de ce type, qui permet de combiner précision, rapidité et capacité d'observation de formes complexes sans zone d'ombre.

Elle propose, à cet effet un procédé conformément de la revendication 1.

L'invention permet donc d'obtenir la distance d'un point par rapport au plan de référence, de façon simple et rapide par détermination de la largeur spectrale et/ou de la longueur d'onde centrale de la lumière réfléchie ou rétrodiffusée par ce point.

La longueur d'onde d'éclairage peut par exemple varier de façon continue entre deux valeurs limites. Dans une autre réalisation, elle peut varier de façon discontinue et prendre un certain nombre de valeurs prédéterminées.

De préférence, les faisceaux d'éclairage convergent sur la direction axiale d'éclairage en des points qui sont répartis le long de cette direction dans l'ordre des longueurs d'onde.

Avantageusement, la lumière réfléchie ou rétrodiffusée par ladite surface est captée dans une direction qui est approximativement confondue avec la direction axiale d'éclairage. Le procédé selon l'invention n'est alors pas limité par des "zones d'ombre" de la surface observée.

L'invention propose également un dispositif conformément à la revendication 6.

Les moyens d'éclairage peuvent comprendre une source lumineuse polychromatique de largeur spectrale déterminée, associée par une fente ou un diaphragme à un élément dispersant tel qu'un prisme, un réseau ou une lentille holographique par exemple, ou plusieurs sources lumineuses à faible largeur spectrale et ayant des longueurs d'onde centrales différentes, pour former les faisceaux lumineux précités.

Les moyens d'analyse spectrale peuvent comprendre un élément dispersant, tel qu'un prisme ou analogue, associé à des capteurs photosensibles à disposition linéaire ou matricielle.

En variante, les moyens d'analyse spectrale peuvent comprendre une barrette linéaire triple de photodétecteurs pour la mesure et la comparaison des flux lumineux dans trois couleurs fondamentales.

Dans un mode de réalisation préféré de l'invention, l'élément de dispersion spectrale des moyens d'éclairage est une lentille chromatique dont la distance focale varie continûment avec la longueur d'onde et qui est associée à un objectif, par exemple afocal, de grandissement pour augmenter la profondeur de champ utilisable. De plus, le dispositif comprend un objectif pour l'éclairage de la surface par les faisceaux précités et la reprise de la lumière réfléchie ou rétrodiffusée par cette surface, cet objectif étant associé à un masque ou diaphragme comportant un orifice circulaire ou en forme de fente délimitant une zone d'observation de la surface éclairée, et des moyens commandés de déplacement relatif de la surface et du masque ou diaphragme.

De façon générale, l'invention permet d'acquérir une forme tridimensionnelle de façon précise, rapide et complète, avec des moyens de calcul peu importants et des moyens optiques peu onéreux.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un premier mode d'éclairage d'une surface ;
- la figure 2 est un graphe illustrant les variations de largeur spectrale, en fonction de la distance le long de l'axe Y, de la lumière réfléchie ou rétrodiffusée par la surface éclairée comme représenté en figure 1 ;
- la figure 3 représente schématiquement un deuxième mode d'éclairage d'une surface ;
- la figure 4 est un graphe représentant schématiquement les variations de largeur spectrale et de longueur d'onde cenérale, en fonction de la distance le long de l'axe Y, de la lumière réfléchie ou rétrodiffusée par la surface éclairée comme représenté en figure 3 ;
- la figure 5 représente schématiquement le mode d'éclairage d'une surface selon l'invention ;
- la figure 6 représente schématiquement un mode de réalisation d'un dispositif;
- la figure 7 représente schématiquement une variante de réalisation des moyens d' éclairage du dispositif de la figure 6.

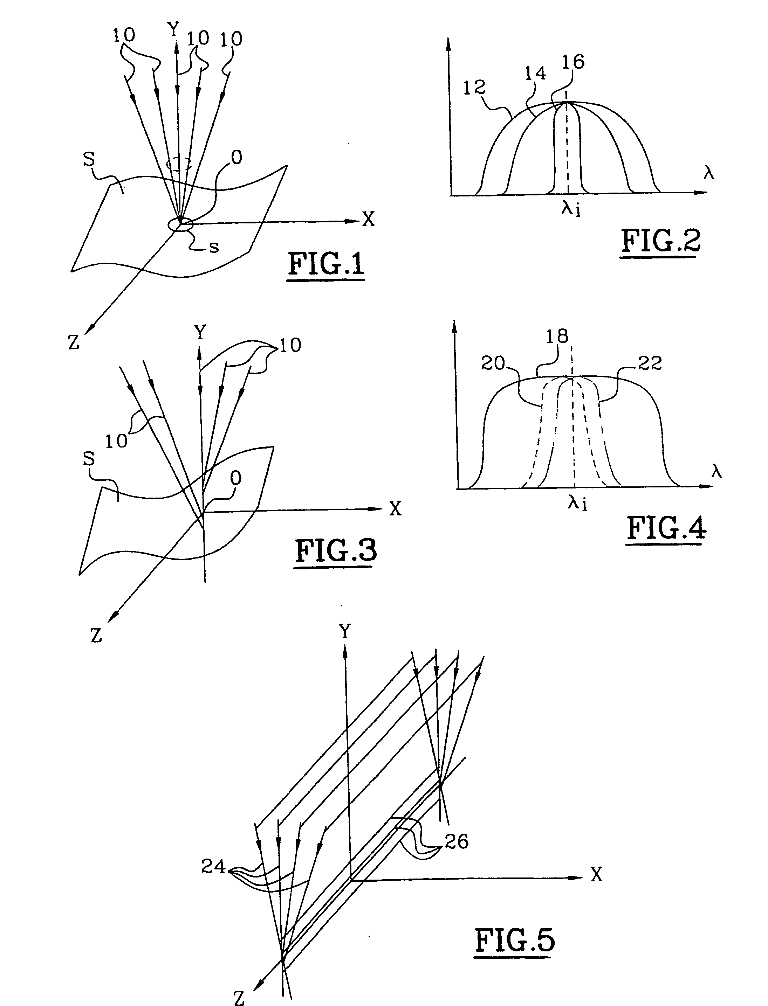

En figure 1, une surface S est éclairée par plusieurs faisceaux lumineux 10 monochromatiques ou à faible largeur spectrale, qui ont des directions différentes et des longueurs d'onde différentes, et qui convergent en un même point O situé sur la surface S ou au voisinage de cette surface, ce point de convergence des faisceaux 10 formant un point de référence pour l'évaluation des distances des points de la surface S dans une direction fixe d'observation.

Dans l'exemple représenté, ce point de référence est dans le plan XZ perpendiculaire à l'axe Y qui est la direction d'observation, confondue avec la direction moyenne d'éclairage de la surface S.

Les faisceaux 10 sont monochromatiques et leurs longueurs d'onde peuvent être réparties de façon continue autour d'une longueur d'onde centrale qui est celle du faisceau d'éclairage 10 aligné sur l'axe Y.

Lorsqu'une surface élémentaire s de la surface S se trouve au voisinage immédiat du point O sur l'axe Y, elle est éclairée par l'ensemble des faisceaux 10 et réfléchit ou rétrodiffuse toutes les longueurs d'onde de ces faisceaux. La lumière captée dans la direction Y va donc avoir une largeur spectrale allant de la longueur d'onde la plus faible à la longueur d'onde la plus élevée des faisceaux 10, cette largeur spectrale étant représentée schématiquement par la courbe 12 de la figure 2.

Si la surface élémentaire s de la surface S se trouve sur l'axe Y dans la position représentée en pointillés en figure 1, elle n'est plus éclairée par la totalité des faisceaux 10, mais par une partie d'entre eux, et la lumière rétrodiffusée par cette surface élémentaire aura la largeur spectrale représentée par la courbe 14 en figure 2.

Si la surface élémentaire s de la surface S examinée se trouve encore plus loin du point O sur l'axe Y, elle ne sera plus éclairée que par le faisceau 10 aligné sur l'axe Y et la lumière rétrodiffusée aura une très faible largeur spectrale comme représenté schématiquement par la courbe 16 de la figure 2, cette largeur spectrale étant centrée sur la longueur d'onde λi du faisceau 10 aligné sur l'axe Y.

La largeur spectrale de la lumière rétrodiffusée par une surface élémentaire permet donc de déterminer sa position sur l'axe Y par rapport au point O de convergence des faisceaux d'éclairage.

Pour éviter une indétermination sur la position de la surface élémentaire s d'un côté ou de l'autre du point O sur l'axe Y, ce procédé impose de maintenir le point O au-dessus ou au-dessous de la surface S étudiée.

On évite cette limitation en utilisant le mode d'éclairage représenté schématiquement en figure 3, dans lequel les divers faisceaux d'éclairage 10 convergent sur l'axe Y en des points différents, qui sont avantageusement échelonnés le long de cet axe dans l'ordre des longueurs d'onde des faisceaux d'éclairage, mais qui pourraient être répartis sur cet axe dans un ordre quelconque prédéterminé.

Ainsi, lorsque λi est la longueur d'onde du faisceau d'éclairage aligné sur l'axe Y, la position d'une surface élémentaire de la surface S sur l'axe Y par rapport au point O est déterminée par la longueur d'onde centrale et par la largeur spectrale de la lumière rétrodiffusée par cette surface élémentaire, comme représenté schématiquement en figure 4 :
- si la lumière rétrodiffusée par la surface élémentaire a la largeur spectrale représentée schématiquement par la courbe 18, elle se trouve au point O ou au voisinage immédiat de celui-ci,
- si la largeur spectrale est celle de la courbe 20, la surface élémentaire se trouve au-dessus du point O sur l'axe Y (lorsque les faisceaux de plus faible longueur d'onde coupent l'axe Y au-dessus du point O) et la distance au point O est déterminée par la largeur spectrale de la courbe 20,
- si la largeur spectrale de la lumière rétrodiffusée par la surface élémentaire correspond à la courbe 22, cette surface élémentaire se trouve sous le point O sur l'axe Y et la largeur spectrale de la lumière rétrodiffusée détermine sa distance par rapport au point O.

En pratique, cet échelonnement des points d'intersection des différents faisceaux le long de l'axe Y peut être obtenu très simplement, en utilisant une lentille dont le chromatisme n'a pas été corrigé, cette lentille chromatique permettant de focaliser les différents faisceaux entre des points répartis le long de l'axe dans l'ordre des longueurs d'onde.

Selon l'invention, on utilise le mode d'éclairage représenté schématiquement en figure 5 pour l'acquisition, non plus de la distance d'une surface élémentaire par rapport au point O sur l'axe Y, mais des distances par rapport à l'axe Z des points constituant un profil dans le plan YZ de la surface observée S.

On utilise des nappes lumineuses planes 24 qui ont des longueurs d'onde différentes et des orientations différentes, dont l'une (comprenant par exemple la longueur d'onde centrale de l'éclairage) passe par l'axe Y et l'axe Z et dont les autres sont parallèles à l'axe Z et coupent cette nappe selon des lignes 26 parallèles à l'axe Z et échelonnées le long de l'axe Y dans l'ordre des longueurs d'onde d'éclairage.

En captant dans le plan YZ la lumière qui est rétrodiffusée par la surface observée, on peut acquérir, non plus une distance correspondant à la position d'une surface élémentaire sur l'axe Y, mais un profil de points correspondant à l'intersection de la surface S observée et du plan YZ. Par déplacement relatif de cette surface le long de l'axe X, on peut acquérir une pluralité de profils de la surface observée et échantillonner très rapidement les coordonnées des points de cette surface dans l'espace XYZ.

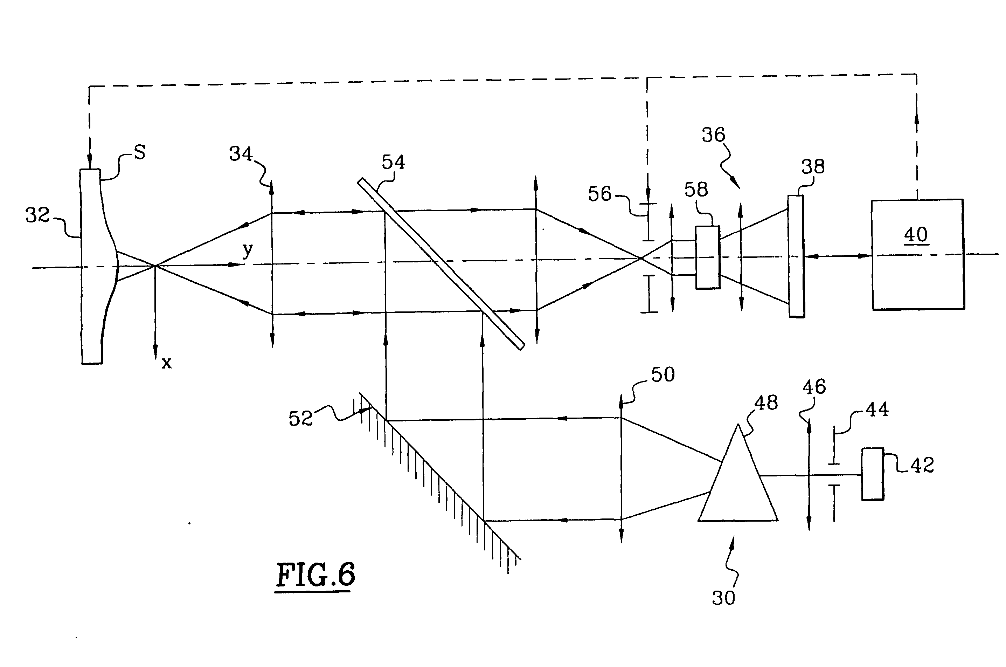

La figure 6 représente schématiquement un mode de réalisation préféré d'un dispositif, qui comprend essentiellement des moyens 30 d'éclairage de la surface S d'un objet 32, un objectif 34 de convergence de l'éclairage sur la surface S, de reprise de la lumière rétrodiffusée par la surface S et de formation d'une image sur des moyens 36 d'analyse spectrale comprenant un élément dispersant et des photorécepteurs appropriés 38, et des moyens 40 de traitement de l'information pilotant les photorécepteurs 38 au moyen d'une interface appropriée et fournissant les distances des points de la surface S par rapport à un plan de référence perpendiculaire à l'axe commun Y d'éclairage et de reprise de la lumière.

De façon plus détaillée, les moyens d'éclairage 30 comprennent une source lumineuse 42 générant un faisceau lumineux de largeur spectrale déterminée, qui passe à travers un diaphragme ou une fente 44 et une lentille 46 pour atteindre un élément de dispersion spectrale 48 tel qu'un prisme, un réseau ou une lentille holographique par exemple.

Le faisceau sortant de l'élément 48 passe par une lentille de collimation 50 et est renvoyé par un miroir 52 sur une lame semi-transparente 54 associée à l'objectif 34 et renvoyant le faisceau d'éclairage vers la surface S à travers la lentille frontale de l'objectif 34.

La lumière rétrodiffusée par la surface S de l'objet 32 est captée par l'objectif 34 dans la direction de l'axe Y et transmise aux moyens 36 d'analyse spectrale par l'intermédiaire d'un diaphragme 56 ou d'un masque percé d'un orifice ou d'une fente, qui permet de former sur les moyens 36 d'analyse spectrale l'image d'une surface élémentaire ou quasi-ponctuelle de la surface S ou d'un profil de cette surface.

Lorsque le diaphragme 44 du moyen d'éclairage 30 forme un faisceau d'éclairage à section sensiblement circulaire et que le diaphragme ou le masque 56 comporte également un orifice circulaire de passage de la lumière, l'élément dispersant 58 des moyens 36 d'analyse spectrale décale les rayons lumineux en fonction de leur longueur d'onde dans la direction de l'axe X, perpendiculaire à l'axe Y et compris dans le plan du dessin. Les moyens photorécepteurs 38 peuvent être constitués d'une barrette linéaire de photodétecteurs alignés parallèlement à l'axe X, de sorte que le signal de sortie d'un photodétecteur de la barrette correspond à une longueur d'onde déterminée. Les signaux de sortie des photodétecteurs 38, traités par les moyens 40, permettent d'obtenir directement la largeur spectrale et la longueur d'onde centrale de la lumière rétrodiffusée par une surface élémentaire de la surface S de l'objet 32 et donc la distance de cette surface élémentaire par rapport à un plan de référence perpendiculaire à l'axe Y, moyennant un étalonnage préalable du dispositif permettant d'obtenir des tables de calibration qui sont enregistrées en mémoire des moyens 40 de traitement de l'information.

Ces moyens 40 peuvent également être utilisés pour commander un déplacement relatif de la surface S et/ou du masque ou diaphragme 56 dans un plan perpendiculaire à l'axe Y pour l'observation de toutes les surfaces élémentaires composant la surface S.

Dans l'exemple qui vient d'être décrit, la source lumineuse 42 fournit un spectre lumineux continu dont les composantes spectrales sont décalées de façon continue par l'élément dispersant 48 pour former les faisceaux lumineux 10 précités, que les lentilles frontales de l'objectif 34 font converger sur l'axe Y au voisinage de la surface S.

En variante, lorsque le nombre nécessaire de faisceaux lumineux ayant des longueurs d'onde différentes et des directions différentes est relativement faible, on peut remplacer la source lumineuse 42 polychromatique et les moyens 48 de dispersion spectrale par plusieurs sources lumineuses sensiblement monochromatiques ou à faible largeur spectrale, fournissant directement les différents faisceaux ayant les différentes longueurs d'onde.

Dans une variante permettant d'obtenir le mode d'éclairage représenté schématiquement en figure 5, le diaphragme 44 comporte une fente étroite de passage de la lumière, qui est allongée dans une direction perpendiculaire au plan du dessin et, de même, le diaphragme ou masque 56 comporte une fente étroite de passage de la lumière qui est allongée perpendiculairement au plan du dessin.

Les moyens photorécepteurs 38 comprennent alors une matrice de photodétecteurs agencés en rangées et en colonnes parallèles aux axes X et Z respectivement (l'axe Z étant perpendiculaire au plan du dessin).

Les moyens 36 d'analyse spectrale peuvent être dans ce cas constitués d'un spectromètre imageur à fente, associé à la matrice de photodétecteurs.

Les moyens photodétecteurs 38 peuvent aussi être constitués d'une barrette linéaire triple (du type TRICCD par exemple) permettant la mesure et la comparaison des flux lumineux dans trois couleurs fondamentales du spectre visible.

Lorsque les moyens 38 comprennent une matrice de photodétecteurs placée dans le plan ZX, on peut acquérir simultanément un ensemble de spectres lumineux qui fournissent, après traitement par les moyens 40, un profil formé d'un ensemble de points correspondant à une coupe de la surface S par le plan YZ. Il suffit alors d'un déplacement relatif de la surface S par exemple par translation le long de l'axe X pour acquérir un ensemble de profils constituant la surface S, cette acquisition pouvant être rapide. En variante, le mouvement relatif de la surface S peut être une rotation autour de l'axe Y ou d'un axe contenu dans le plan YZ. La connaissance de la position relative surface S-dispositif permet, par transformation de coordonnées, d'obtenir les coordonnées dans un même repère des points de chaque profil acquis.

Il est souhaitable, dans une phase préalable, d'éclairer la surface S par un faisceau dans lequel sont mélangées (et non plus dispersées) toutes les composantes spectrales de l'éclairage. Cela peut se faire, par exemple, de façon simple en ne faisant pas passer le faisceau lumineux généré par la source 42 par les moyens de dispersion 48. Dans ce cas, la lumière rétrodiffusée par la surface S est captée et transmise comme décrit aux photodétecteurs 38 dont les signaux de sortie fournissent des signaux de référence mémorisés dans les moyens 40 de traitement de l'information, pour rendre les mesures insensibles aux variations des réponses spectrales de la surface S (dues à la couleur et aux variations de couleur de cette surface) et aux variations à long terme des moyens d'éclairage.

Des tables de calibration, obtenues par déplacement d'un objet de forme connue et mémorisation des signaux obtenus en différents points le long de l'axe Y, permettent de déterminer les distances des points de la surface d'un objet à partir des informations de longueur d'onde et de largeur spectrale fournies par les photorécepteurs 38.

Dans un mode de réalisation de l'invention, les moyens d'éclairage 30 comprennent une lampe à arc ou une lampe à halogène, placée entre un miroir collecteur et un condenseur et éclairant à travers la fente d'entrée 44 un réseau de diffraction 48, par exemple un réseau sphérique holographique à champ plan.

Les moyens d'analyse 36 comprennent le même type de réseau de diffraction, associé à des photorécepteurs CCD.

L'objectif 34 forme l'image du spectre fourni par les moyens 36 et l'image blanche du réseau 48 dans l'espace de mesure, ces images ayant la même hauteur et délimitant l'espace de mesure. Ce mode de réalisation permet la mesure de profils ayant une longueur de l'ordre de 20 mm avec une profondeur de champ utile de l'ordre de 30 mm. Avec une caméra CCD standard, les profils sont échantillonnés avec une résolution d'environ 40 µm. La précision sur la mesure de la distance de chaque point est de l'ordre d'1 µm.

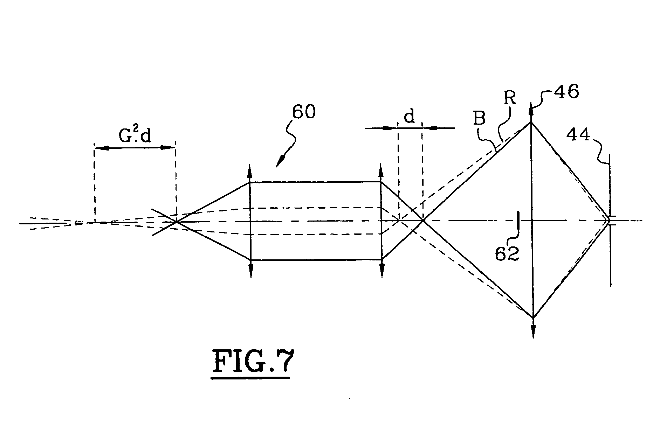

Un mode de réalisation préféré des moyens d'éclairage de ce dispositif est représenté en figure 7 (de façon simplifiée, le miroir de renvoi 52 et la lame semi-transparente 54 n'étant pas représentés). Dans cette réalisation, la lentille 46 est une lentille ou un système optique chromatique dont la distance focale varie continûment avec la longueur d'onde, et l'élément dispersant 48 de la figure 6 est supprimé. Les différentes longueurs d'onde du faisceau lumineux d'éclairage passant par la fente du masque ou diaphragme 44 sont focalisées en des points différents sur l'axe d'éclairage, ce que l'on a illustré schématiquement en figure 7, les traits pleins B représentant la focalisation des longueurs d'onde correspondant au bleu, les traits en tirets R représentant la focalisation des longueurs d'onde correspondant au rouge, la distance d entre les points de focalisation des longueurs d'onde extrêmes de l'éclairage correspondant à la profondeur de champ utilisable.

Pour être efficace, le système optique chromatique schématisé par la lentille 46 doit avoir une forte ouverture et conserver une bonne qualité d'imagerie monochromatique. En pratique, cela peut avoir pour conséquence de limiter la profondeur de champ utilisable.

L'invention prévoit alors d'associer un système optique 60, par exemple afocal, de grandissement G au système optique 46, ce qui a pour effet de multiplier la profondeur de champ par G² (G étant par exemple égal à 4). Les lentilles de ce système 60 ont des diamètres faibles, limités à la dimension de la zone à éclairer sur la surface S précitée.

Eventuellement, le système afocal 60 est formé par la lentille 50 et l'objectif 34 de la réalisation de la figure 6.

Quand une grande discrimination spectrale est requise, on peut avantageusement disposer sur l'axe optique un masque 62 après la lentille 46, ce masque s'étendant par exemple parallèlement à la fente d'éclairage. Le masque 62 permet l'occultation des rayons lumineux centraux, évitant un mélange chromatique trop important dans l'éclairage de la surface S.

Dans ce mode de réalisation préféré de l'invention et lorsque les matériaux de la lentille chromatique 46 et de l'élément dispersant 58 des moyens d'analyse 36 ont les mêmes propriétés de séparation spectrale, il suffit de connaître la longueur d'onde centrale de la lumière rétrodiffusée par un point de la surface S pour déterminer la position de ce point par rapport au plan de référence et il n'est plus nécessaire de mesurer la largeur spectrale de cette lumière (la longueur d'onde centrale précitée étant celle pour laquelle l'intensité lumineuse est maximale). Les signaux de sortie des photodétecteurs 38 permettent alors de déterminer directement cette longueur d'onde centrale.

A défaut, l'analyse peut s'appuyer sur la détermination de la longueur d'onde centrale et de la largeur de la lumière rétrodiffusée.

## Revendications

1. Procédé d'acquisition opto-électrique de la forme d'une surface, consistant à éclairer cette surface par des faisceaux lumineux (24) ayant des longueurs d'onde différentes et qui convergent sur une direction axiale d'éclairage (Y) en des points différents répartis le long de cette direction, à capter la lumière réfléchie ou rétrodiffusée par au moins un point de ladite surface éclairé par les faisceaux (24) précités, à analyser spectralement la lumière captée et à déduire de sa composition spectrale la distance du point précité par rapport à un plan de référence (X, Z), **caractérisé en ce que** les faisceaux (24) sont des nappes lumineuses planes (24) qui se coupent sur des lignes (26) parallèles entre elles et sensiblement perpendiculaires à la direction moyenne d'éclairage, pour la détermination de la distance d'un profil de ladite surface (S) dans un plan défini par la direction moyenne d'éclairage et une parallèle aux lignes (26) d'intersection desdites nappes lumineuses (24).

2. Procédé selon la revendication 1, **caractérisé en ce que** la lumière réfléchie ou rétrodiffusée par ladite surface est captée dans une direction (Y) qui est approximativement confondue avec la direction moyenne d'éclairage et sensiblement perpendiculaire au plan de référence (X, Z).

3. Procédé selon l'une des revendications précédentes, **caractérisé en ce qu'**il consiste à déduire la distance des points du profil précité de la surface (S) par rapport au plan de référence, à partir de la largeur spectrale et/ou de la longueur d'onde centrale de la lumière captée.

4. Procédé selon l'une des revendications 1 à 3, **caractérisé en ce que** les faisceaux d'éclairage (10) convergent sur la direction axiale d'éclairage (Y) en des points différents répartis dans cette direction dans l'ordre des longueurs d'onde des faisceaux.

5. Procédé selon l'une des revendications précédentes, **caractérisé en ce qu'**il consiste à mélanger les faisceaux d'éclairage (10) en un faisceau unique, à éclairer ladite surface (S) par ce faisceau unique, à capter et à analyser spectralement la lumière réfléchie ou rétrodiffusée par cette surface et à enregistrer les résultats pour s'affranchir ensuite de l'influence des couleurs et des variations de couleurs de la surface et des variations à long terme de l'éclairage.

6. Dispositif pour l'acquisition opto-électrique de la forme d'une surface, comprenant des moyens (30) d'éclairage de la surface (S) par des faisceaux lumineux ayant des longueurs d'onde différentes et qui convergent sur une direction axiale d'éclairage en des points différents répartis le long de cette direction, des moyens (34) captant la lumière réfléchie ou rétrodiffusée par ladite surface dans une direction (Y) donnée, et des moyens (36, 38) d'analyse spectrale de la lumière captée, associés à des moyens (40) de traitement de l'information pour déterminer les distances des points de la surface par rapport à un plan de référence, **caractérisé en ce que** les faisceaux sont des nappes lumineuses planes (24) qui se coupent sur des lignes (26) parallèles entre elles et sensiblement perpendiculaires à la direction moyenne d'éclairage, pour la détermination de la distance d'un profil de ladite surface (S) dans un plan défini par la direction moyenne d'éclairage et une parallèle aux lignes (26) d'intersection desdites nappes lumineuses (24).

7. Dispositif selon la revendication 6, **caractérisé en ce que** les moyens d'éclairage (30) comprennent une source lumineuse polychromatique (42) de largeur spectrale déterminée, éclairant un élément de dispersion spectrale (48) à travers une fente.

8. Dispositif selon la revendication 7, **caractérisé en ce que** l'élément de dispersion spectrale des moyens d'éclairage est une lentille chromatique (46) dont la distance focale varie continûment avec la longueur d'onde.

9. Dispositif selon la revendication 8, **caractérisé en ce que** la lentille chromatique (46) est associée à un système optique, par exemple afocal, de grandissement (60) pour augmenter la profondeur de champ utilisable entre les longueurs d'onde extrêmes de l'éclairage.

10. Dispositif selon la revendication 7 ou 8, **caractérisé en ce qu'**un masque (62) est placé sur l'axe optique des moyens d'éclairage (30), par exemple après la lentille chromatique (46), pour occulter les rayons centraux d'éclairage.

11. Dispositif selon la revendication 6, **caractérisé en ce que** les moyens d'éclairage (30) comprennent plusieurs sources lumineuses à faible largeur spectrale et ayant des longueurs d'onde centrales différentes.

12. Dispositif selon l'une des revendications 6 à 11, **caractérisé en ce que** les moyens (36) d'analyse spectrale comprennent un élément (58) de dispersion spectrale tel qu'un prisme ou analogue associé à des capteurs photosensibles (38) à disposition linéaire ou matricielle.

13. Dispositif selon l'une des revendications 6 à 12, **caractérisé en ce que** les moyens (36) d'analyse spectrale comprennent une barrette linéaire triple de photodétecteurs pour la mesure et la comparaison des flux lumineux dans trois couleurs fondamentales.

14. Dispositif selon l'une des revendications 6 à 13, **caractérisé en ce qu'**il comprend un objectif (34) d'éclairage de la surface (S) par les faisceaux précités et de reprise de la lumière réfléchie ou rétrodiffusée par cette surface, cet objectif étant associé à un masque ou diaphragme (56) comportant une fente de passage de la lumière délimitant une zone d'observation de la surface éclairée (S), et des moyens commandés de déplacement relatif de la surface (S) et du masque ou diaphragme(56).

## Patentansprüche

1. Verfahren zur optoelektrischen Erfassung der Form einer Oberfläche, das darin besteht, diese Oberfläche (S) durch Lichtstrahlen (24) zu beleuchten, die unterschiedliche Wellenlängen aufweisen und die in einer axialen Beleuchtungsrichtung (Y) zu unterschiedlichen Punkten konvergieren, die entlang dieser Richtung verteilt sind, das durch mindestens einen Punkt der durch die genannten Strahlen (24) beleuchteten Oberfläche reflektierte oder zurückgestreute Licht einzufangen, das eingefangene Licht spektral zu analysieren und aus seiner spektralen Zusammensetzung die Entfernung des genannten Punktes in Bezug auf eine Referenzebene (X, Z) abzuleiten, **dadurch gekennzeichnet, dass** die Strahlen (24) ebene Lichtfelder (24) sind, die sich auf zueinander parallelen und im Wesentlichen zur mittleren Beleuchtungsrichtung senkrechten Linien (26) schneiden, zur Bestimmung der Entfernung eines Profils der Oberfläche (S) in einer durch die mittlere Beleuchtungsrichtung definierten Ebene und einer Parallele zu den Schnittlinien (26) der Lichtfelder (24).

2. Verfahren nach Anspruch 1, **dadurch gekennzeichnet, dass** das durch die Oberfläche reflektierte oder zurückgestreute Licht in einer Richtung (Y) aufgefangen wird, die ungefähr mit der mittleren Beleuchtungsrichtung zusammenfällt und im Wesentlichen senkrecht zur Referenzebene (X, Z) ist.

3. Verfahren nach einem der vorhergehenden Ansprüche, **dadurch gekennzeichnet, dass** es darin besteht, die Entfernung von Punkten des genannten Profils der Oberfläche (S) in Bezug auf die Referenzebene ausgehend von der Spektralbreite und/oder der zentralen Wellenlänge des eingefangenen Lichts abzuleiten.

4. Verfahren nach einem der Ansprüche 1 bis 3, **dadurch gekennzeichnet, dass** die Beleuchtungsstrahlen (10) in der axialen Beleuchtungsrichtung (Y) in der Reihenfolge der Wellenlänge der Strahlen zu unterschiedlichen Punkten konvergieren, die in dieser Richtung verteilt sind.

5. Verfahren nach einem der vorhergehenden Ansprüche, **dadurch gekennzeichnet, dass** es darin besteht, die Beleuchtungsstrahlen (10) in einen einzigen Strahl zu vermischen, die Oberfläche (S) durch diesen einzigen Strahl zu beleuchten, das von dieser Oberfläche reflektierte oder zurückgestreute Licht einzufangen und spektral zu analysieren und die Ergebnisse zu speichern, um dann den Einfluss der Farben und der Farbveränderungen der Oberfläche und Langzeitveränderungen der Beleuchtung zu eliminieren.

6. Vorrichtung zur optoelektrischen Erfassung der Form einer Oberfläche umfassend Mittel (30) zur Beleuchtung der Oberfläche (S) mit Lichtstrahlen, die unterschiedliche Wellenlängen aufweisen und die in einer axialen Beleuchtungsrichtung (Y) zu unterschiedlichen Punkten konvergieren, die entlang dieser Richtung verteilt sind, Mittel (34) zum Einfangen des durch die Oberfläche reflektierten oder zurückgestreuten Lichts in einer gegebenen Richtung (Y) und Mittel (36, 38) zur spektralen Analyse des eingefangenen Lichts, verbunden mit Mitteln (40) zur Verarbeitung der Information zur Bestimmung der Entfernungen von Punkten der Oberfläche in Bezug auf eine Referenzebene, **dadurch gekennzeichnet, dass** die Strahlen ebene Lichtfelder (24) sind, die sich auf zueinander parallelen und im Wesentlichen zur mittleren Beleuchtungsrichtung senkrechten Linien (26) schneiden, zur Bestimmung der Entfernung eines Profils der Oberfläche (S) in einer durch die mittlere Beleuchtungsrichtung definierten Ebene und einer Parallele zu den Schnittlinien (26) der Lichtfelder (24).

7. Vorrichtung nach Anspruch 6, **dadurch gekennzeichnet, dass** die Beleuchtungsmittel (30) eine polychromatische Lichtquelle (42) mit bestimmter Spektralbreite umfassen, die durch einen Spalt ein spektrales Dispersionselement (48) beleuchten.

8. Vorrichtung nach Anspruch 7, **dadurch gekennzeichnet, dass** das spektrale Dispersionselement der Beleuchtungsmittel eine chromatische Linse (46) ist, deren Brennweitenabstand sich kontinuierlich mit der Wellenlänge verändert.

9. Vorrichtung nach Anspruch 8, **dadurch gekennzeichnet, dass** die chromatische Linse (46) einem optischen Vergrößerungssystem (60) zugeordnet ist, zum Beispiel einem afokalen, um die Tiefe des verwendbaren Feldes zwischen den extremen Wellenlängen der Beleuchtung zu steigern.

10. Vorrichtung nach Anspruch 7 oder 8, **dadurch gekennzeichnet, dass** eine Maske (62) auf die optische Achse der Beleuchtungsmittel (30) platziert ist, zum Beispiel nach der chromatischen Linse (46), um die zentralen Beleuchtungsstrahlen abzudecken.

11. Vorrichtung nach Anspruch 6, **dadurch gekennzeichnet, dass** die Beleuchtungsmittel (30) mehrere Lichtquellen mit geringer Spektralbreite umfassen und die unterschiedliche zentrale Wellenlängen aufweisen.

12. Vorrichtung nach einem der Ansprüche 6 bis 11, **dadurch gekennzeichnet, dass** die Mittel (36) zur Spektralanalyse ein spektrales Dispersionselement (58) umfassen, wie ein Prisma oder Analoges in Verbindung mit photosensiblen Einfangvorrichtungen (38) mit Linear- oder Matrixdisposition.

13. Vorrichtung nach einem der Ansprüche 6 bis 12, **dadurch gekennzeichnet, dass** die Mittel (36) zur Spektralanalyse eine lineare Dreierleiste von Photodetektoren für die Messung und den Vergleich von Lichtströmen in drei Grundfarben umfassen.

14. Vorrichtung nach einem der Ansprüche 6 bis 13, **dadurch gekennzeichnet, dass** sie ein Objektiv (34) zur Beleuchtung der Oberfläche (S) mit den genannten Strahlen und zum Aufnehmen des von der Oberfläche reflektierten oder zurückgestreuten Lichts umfasst, wobei diesem Objektiv eine Maske oder ein Diaphragma (56) zugeordnet ist, das einen Spalt für den Lichtdurchtritt umfasst, der eine Beobachtungszone der beleuchteten Oberfläche (S) abgrenzt, und steuerbare Mittel für die relative Verschiebung der Oberfläche (S) und der Maske oder des Diaphragmas (56).

## Claims

1. A method of opto-electrical acquisition of the shape of a surface, consisting of illuminating this surface with light beams (24) having different wavelengths and which converge on an axial illumination direction (Y) at different points distributed along that direction, capturing the light reflected or backscattered by at least one point on said surface illuminated by the aforementioned beams (24), spectrally analyzing the light captured and deducing from its spectral composition the distance of the aforementioned point relative to a reference plane (X, Z), **characterized in that** the beams (24) are flat light beams (24) which intersect along parallel lines (26) substantially perpendicular to the average illumination direction to determine the distance of a profile of said surface (S) in a plane defined by the average illumination direction and a line parallel to the lines of intersection (26) of said flat light beams (24).

2. A method according to claim 1, **characterized in that** the light reflected or backscattered by said surface is captured in a direction (Y) which is approximately coincident with the average illumination direction and substantially perpendicular to the reference plane (X, Z).

3. A method according to one of the preceding claims, **characterized in that** it consists of deducing the distance of points of the aforementioned profile of the surface (S) relative to the reference plane from the spectral width and/or the center wavelength of the captured light.

4. A method according to one of claims 1 to 3, **characterized in that** the illumination beams (10) converge on the axial illumination direction (Y) at different points distributed **in that** direction in the order of the wavelengths of the beams.

5. A method according to one of the preceding claims, **characterized in that** it consists of mixing the illumination beams (10) into a single beam, illuminating said surface (S) with that single beam, capturing and spectrally analyzing the light reflected or backscattered by that surface and storing the results to eliminate subsequently the influence of the colors and color variations of the surface and long-term variations of illumination.

6. A device for opto-electrically acquiring the shape of a surface, including means (30) for illuminating the surface (S) by light beams having different wavelengths and converging on an axial illumination direction at different points distributed along that direction, means (34) for capturing the light reflected or backscattered by said surface in a given direction (Y), and means (36, 38) for spectral analyzing the captured light, associated with information processing means (40) for determining the distances of points of the surface relative to a reference plane, **characterized in that** the beams are flat light beams (24) which intersect along parallel lines (26) substantially perpendicular to the average illumination direction to determine the distance of a profile of said surface (S) in a plane defined by the average illumination direction and a line parallel to the lines of intersection (26) of said flat light beams (24).

7. A device according to claim 6, **characterized in that** the illumination means (30) include a polychromatic light source (42) of particular spectral width illuminating a spectral dispersion element (48) through a slit.

8. A device according to claim 7, **characterized in that** the spectral dispersion element of the illumination means is a chromatic lens (46) whose focal length varies continuously with the wavelength.

9. A device according to claim 8, **characterized in that** the chromatic lens (46) is associated with an optical enlarging system (60), for example an afocal system, for increasing the usable depth of field between the extreme illumination wavelengths.

10. A device according to claim 7 or 8, **characterized in that** a mask (62) is placed on the optical axis of the illumination means (30), for example after the chromatic lens, to block the central illuminating rays.

11. A device according to claim 6, **characterized in that** the illumination means (30) include a plurality of light sources of small spectral width and having different center wavelengths.

12. A device according to one of claims 6 to 11, **characterized in that** the spectral analysis means (36) include a spectral dispersion element (58) such as a prism or the like associated with photosensitive sensors (38) in a linear or matrix arrangement.

13. A device according to one of claims 6 to 12, **characterized in that** the spectral analysis means (36) include a triple linear strip of photodetectors for measuring and comparing light fluxes of three primary colors.

14. A device according to one of claims 6 to 13, **characterized in that** it includes an objective (34) for illuminating the surface (S) with the aforementioned beams and capturing the light reflected or backscattered by that surface, the objective being associated with a mask or diaphragm (56) including a slit through which the light passes delimiting an observation area of the illuminated surface (S), and control means for relative displacement of the surface (S) and the mask or diaphragm (56).
